(19) Europäisches Patentamt / European Patent Office / Office européen des brevets

(11) **EP 3 333 471 A1**

(12) **EUROPEAN PATENT APPLICATION**

(43) Date of publication:
**13.06.2018 Bulletin 2018/24**

(51) Int Cl.:
*F16L 51/00* (2006.01)   *F16L 27/12* (2006.01)

(21) Application number: **17275193.5**

(22) Date of filing: **05.12.2017**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA MD TN** | (71) Applicant: **Teconnex Ltd**<br>**Keighley, Yorkshire BD21 4LG (GB)**<br><br>(72) Inventor: **Brown, Ian**<br>**Keighley, Yorkshire BD21 4LG (GB)**<br><br>(74) Representative: **Tomkinson, Alexandra**<br>**Bailey Walsh & Co LLP**<br>**1 York Place**<br>**Leeds, LS1 2DR (GB)** |
| (30) Priority: **06.12.2016 GB 201620711** | |

(54)    **COUPLING APPARATUS AND METHOD OF USE THEREOF**

(57)    There is provided coupling apparatus (2) including coupling means for coupling together the ends of two or more conduits (4, 6) and/or items in use. The coupling means includes at least one of a recess element (38, 40) or a protrusion element (16, 18) defined on a surface of the coupling means arranged to face one of the conduits and/or items in use, for engagement with the other of the at least one recess element (38, 40) or protrusion element (16, 18) defined on an external surface of at least one of the conduits and/or items in use. The at least one recess element is of such size, shape and/or design to allow movement of the at least one protrusion element locatable therein in use a distance equal to, substantially equal to or greater than the thermal expansion of the material used to form at least one of the conduits and/or items.

Figure 1a

**Description**

This invention relates to coupling apparatus and to a method of using coupling apparatus.

Although the following description refers almost exclusively to coupling apparatus for coupling together two conduits or pipes for use in a compressed air distribution system, it will be appreciated by persons skilled in the art that the present invention can be used to couple any two or more items together for use in any suitable application, and particularly, but not necessarily exclusively, to couple together two or more items which may undergo thermal expansion and/or contraction in use.

In compressed air distribution systems, compressed air is transported along large diameter pipes made from aluminium or other lightweight materials. The benefits of using such large diameter pipes made of light weight material is that they can be produced at lower cost, lower air flow losses are incurred due to the large diameters of the pipes, and the cost of installing the pipes is lower due to the light weight nature of the pipes. In addition, the use of large diameter pipes allows the compressed air to be supplied over longer distances without a receiver vessel being used, which also reduces the costs associated with the system.

However, the lightweight materials from which the pipes are constructed, and particularly where aluminium pipes are used, suffer from a problem associated with the high coefficient of thermal expansion of the material. For example, some pipes can expand by approximately 30mm during use of the pipes in normal temperature and pressure conditions. Since pipe distribution systems and pipe joints are typically fixed arrangements, this can lead to bending and/or buckling of the pipes, which can lead to failure of the pipes and/or pipe joints in the system. In an attempt to overcome this problem, is it known to insert rubber hoses, use bellows and/or elbow pipes into the pipe distribution system at 90 degrees to the main length of connecting pipes to allow for thermal expansion and/or contraction of the pipes to be accommodated. The current solutions are expensive and do not offer long term solutions.

It is therefore an aim of the present invention to provide coupling apparatus which overcomes the abovementioned problem.

It is a further aim of the present invention to provide a method of using coupling apparatus that overcomes the abovementioned problem.

It is a further aim of the present invention to provide a compressed air distribution system including coupling apparatus.

It is a yet further aim of the present invention to provide a method of using a compressed air distribution system including coupling apparatus.

According to a first aspect of the present invention there is provided coupling apparatus, said coupling apparatus including coupling means for coupling together the ends of two or more conduits and/or items in use, said coupling means including at least one of a recess element or a protrusion element defined on a surface of the coupling means arranged to face one of the conduits and/or items in use, for engagement with the other of the at least one recess element or protrusion element defined on an external surface of at least one of the conduits and/or items in use, characterised in that the at least one recess element is of such size, shape and/or design to allow movement of the at least one protrusion element locatable therein in use a distance equal to, substantially equal to or greater than the thermal expansion of the material used to form at least one of the conduits and/or items.

Thus, at least one of the conduits and/or items, and preferably both of the conduits and/or items being joined together that are used in the present invention is formed from a material with a known thermal expansion coefficient. The size, shape and/or design of the at least one recess element is such so as to allow the material from which the at least one conduit and/or items is formed from to expand by at least a distance or length equal to or substantially to the thermal expansion or linear thermal expansion of the material. This allows the coupling apparatus to accommodate any thermal expansion that may occur in the at least one conduit and/or item at least in a direction parallel to a longitudinal axis of the conduits and/or items in use, thereby preventing buckling, bending and/or failure of the conduit, item and/or coupling in use. The present invention provides a cost effective solution that can be used over a relatively long period of time in the system. The coupling apparatus of the present invention is also easy to fit.

Preferably the maximum linear thermal expansion of the at least two conduits and/or items being coupled together by the coupling apparatus is calculated, and the length of the recess element(s) in total is such so as to be able to accommodate this maximum linear thermal expansion.

Preferably the at least one recess element is of such size, shape and/or design to allow movement of the at least one protrusion element locatable and/or engageable therein in use a distance at least equal to or substantially equal to the maximum thermal expansion of the material used to form at least one of the conduits and/or items, and preferably both of the conduits and/or items.

In one embodiment the thermal expansion of the material is calculated based on the length of the conduit and/or item, the thermal expansion coefficient of the material from which the conduit and/or item is formed, and the temperature range or maximum temperature range over which the apparatus will operate in and/or be exposed to in use.

Preferably the length of the at least one recess element is at least equal to or substantially equal to the linear thermal expansion of the material from which the conduit and/or item is formed.

In one embodimdent if a recess element is provided on more than one conduit and/or item, preferably the length of the recess element is divided by the number of conduits and/or items having the recess element. Thus, each recess element is arranged to take up part of the thermal expansion associated with the materials from which the conduit(s) and/or item(s) is/are formed.

In one embodiment at least one of the recess elements and at least one of the protrusion elements which engage and/or are located together in use in use are not of complementary size, shape and/or design or substantially complementary size, shape and/or design. Thus, they are of different or substantially different size, shape and/or design.

Preferably at least one other recess element and protrusion element engageable and/or locatable together are of the same or substantially the same size, shape and/or design or complementary in size, shape and/or design.

Preferably the thermal expansion coefficient that is used to calculate the thermal expansion of the material is the linear thermal expansion coefficient of the material or materials used to form at least one of the conduits and/or items in use.

Preferably the thermal expansion coefficient is the thermal expansion coefficient of the material or materials at a pre-determined pressure, such as for example, atmospheric pressure or the pressure at the location in which the apparatus is to be used.

For example, the linear thermal expansion coefficient of a material ($\alpha_L$) can be calculated as:

$$\alpha_L = 1/L \times dL/dT$$

where L is a particular length measurement and dL/dT is the rate of change of that linear dimension per unit change in temperature.

The change in the linear dimension of material due to thermal expansion can be estimated to be:

$$\Delta L/L = \alpha_L \Delta T$$

Preferably the formula for calculating the increase in length of a conduit is:

$$\Delta L = OL \times \alpha_L \times \Delta T$$

Where, OL = the length of the conduit or item being assessed for thermal expansion;
$\alpha_L$ is the thermal expansion coefficient for the material from which the conduit or item is formed; and
$\Delta T$ is the maximum change of temperature that will be encountered by the conduit or item in use.

A worked example is provided below for a conduit formed from aluminium, wherein aluminium has a linear thermal expansion coefficient $\alpha$ at 20°C of 23.1 ($10^{-6}K^{-1}$).

**Increase of length associated with Temperature increase.**

Tube length at room temperature    OL := 6m

Coefficient of expansion    $\lambda A := 23.1 \cdot 10^{-6} \dfrac{mm}{mm \cdot K}$    For aluminium for example

Change in Temperature    $\Delta T := 30 \cdot \Delta °C$
                           $\Delta t := OL \cdot \lambda A \cdot \Delta T$

                           $\Delta L = 4.158$ mm

The recess element or elements provided in the coupling apparatus therefore have to accommodate a maximum length increase in the conduits due to linear thermal expansion of 4.158mm. The total length of the recess element or recess elements is therefore at least equal to 4.158mm, if not slightly larger to ensure sufficient accommodation for linear thermal expansion of the conduit materials.

The increase in length of a conduit material creates an axial force in the conduit and/or items secured in known proportion to the extension and the strength of the material used. In the worked example shown above, the length created by the thermal expansion is restrained by the end fixings of the conduit, and this will create a force in the conduit of known proportion.

Strain in material $\qquad \delta L := \dfrac{\Delta L}{OL} \qquad\qquad \delta L = 0.00069 \cdot \dfrac{mm}{mm}$

$$E_{al} := \dfrac{\sigma_{tube}}{\delta L}$$

Youngs Modulus for Material $\qquad \sigma_{tube} := E_{al} \cdot \delta L \qquad E_{al} := 69 \cdot GPa \qquad$ For aluminium for example

$$\sigma_{tube} := E_{al} \cdot \delta L \qquad\qquad \sigma_{tube} = 47.82 \cdot \dfrac{N}{mm^2}$$

For a 101.6mm (4 inch) diameter conduit for example:

$$R_o = 101.6 \cdot mm \qquad\qquad R_i := R_o - 2 \cdot mm$$

$$A_t := \pi \cdot \left( R_o^2 - R_i^2 \right) \qquad A_t = 1264 \cdot mm^2$$

Tube Force $\quad F_t := \sigma_{tube} \cdot A_t \qquad\qquad F_t = 60449\ N$

However, the buckling load is obtainable from Eulers formula:

$$K_t := 0.25$$

$$I_t := \dfrac{\pi}{4} \left( R_o^4 - R_i^4 \right)$$

using Eulers Formula for Tubular column

$$Pd := K_t \cdot \dfrac{\pi^2 \cdot E_{al} \cdot I_t}{OL^2} \qquad\qquad Pd = 30255\ N$$

This value being substantially less than that caused by the force generated in the conduit (Ft) implies that the conduit will buckle at the value of expansion length associated with generating this (Pd) axial force unless accommodation for the thermal expansion is built into, or provided for, in the conduit.

It will be appreciated by persons skilled in the art that the force required to move the conduit(s) relative to the coupling means due to thermal expansion must be less than the Euler buckling load for a particular length of the conduit(s). Thus, if the Euler buckling load is calculated for a particular conduit, it can be followed that the conduit needs to be capable of moving relative to the coupling apparatus (i.e. the protrusion element movable in the recess element) against frictional forces during thermal expansion at a force similar or equal to the Euler buckling load. The frictional forces could be created as a result of the sealing means, the conduit with respect to the coupling means and/or the like and could be adapted so that the conduit is able to move relative to the same to accommodate thermal expansion.

In one embodiment a length of the recess element is such so as to allow movement of the at least one protrusion element locatable and/or engageable therein in use a distance equal to or substantially equal to the linear thermal expansion of the conduit and/or item material(s). Thus, the length of the recess element can be such so as to accommodate any movement, and preferably sliding axial movement, of the conduits and/or items incurred as a result of thermal expansion and/or contraction of one or more of the conduits and/or items (and preferably both of the conduits and/or items) in use. This reduces the axial force that might be generated in the conduit(s) and/or item(s) due to thermal expansion below that required to buckle the conduit and/or item along a longitudinal axis or axes thereof.

Preferably the length of the recess element or elements is such so as to accommodate a maximum level of movement that may be encountered for a particular linear thermal expansion of the material of the conduits and/or pipes, for a pre-determined or maximum length of conduit, for a pre-determined, minimum or maximum temperature or temperature range, and/or for a pre-determined, minimum or maximum pressure or pressure range.

Preferably the present invention can be universally applied to any conduit and/or item formed from any or any combination of materials.

Preferably the length of the recess element is arranged in an axial direction or a direction parallel or substantially parallel to the longitudinal axis of the conduit(s) and/or item(s) being joined.

In one embodiment the at least one recess element is provided on or associated with the coupling means, and preferably on an inner or inwardly facing surface of the same. Preferably the at least one protrusion element is provided on or associated with the one or more conduits and/or items, and preferably on an outer or external facing surface of the same.

In one embodiment the at least one recess element is provided on or associated with the at least one conduit and/or item, and preferably on an outer or external facing surface of the same. Preferably the at least one protrusion element is provided on or associated with the coupling means, and preferably on an inner or inwardly facing surface of the same.

In one embodiment the at least one recess element includes two or more recess elements located at spaced apart intervals on the coupling means on the at least one conduit and/or item and/or at least one recess element is provided on each conduit and/or item being joined. The two or more recess elements can be of the same or substantially the same size, shape and/or design, or can be of a different or substantially different size, shape and/or design.

In one embodiment the at least one protrusion element includes two or more protrusion elements located at spaced apart intervals on the coupling means on the at least one conduit and/or item and/or at least one protrusion element is provided on each conduit and/or item being joined. The two or more protrusion elements can be of the same or substantially the same size, shape and/or design, or can be of a different or substantially different size, shape and/or design.

Preferably the at least one recess element is provided circumferentially or peripherally on the coupling means and/or the at least one conduit and/or item. For example, the at least one recess element can be provided transverse, perpendicular or substantially perpendicular to the longitudinal axis of the at least one conduit and/or item. In one example, the at least one recess element provides an annular ridge or castellated annular ridge.

Preferably the at least one protrusion element is provided circumferentially or peripherally on the coupling means and/or the at least one conduit and/or item. For example, the at least one protrusion element can be provided transverse, perpendicular or substantially perpendicular to the longitudinal axis of the at least one conduit and/or item. In one example, the at least one protrusion element provides an annular protrusion or castellated annular protrusion.

In one embodiment at least two recess elements are provided, each recess element is located a spaced distance apart in a direction parallel or substantially parallel to the longitudinal axis of the coupling means and/or one or more conduits and/or items. In this embodiment, in one example, the at least two recess elements are of equal or substantially equal size, shape and/or design. Thus, in one embodiment, the arrangement of the at least two recess elements in or associated with the coupling means or at a join of the conduits and/or items is symmetrical or substantially symmetrical. In this embodiment, in one example, the at least two recess elements are of different or substantially different size, shape and/or design. Thus, in one embodiment, the arrangement of the at least two recess element in or associated with the coupling means or at a join of the conduits and/or items is asymmetrical or substantially asymmetrical.

In the example where the arrangement of the at least two recess elements on the coupling means and/or one or more conduits and/or items is symmetrical or substantially symmetrical and/or equal or substantially equal in length, the length of each recess element can be half or substantially half the distance of linear thermal expansion of the material from which the one or more conduits and/or items are formed. Thus, in this example, the length of the at least two recess elements in combination is at least equal to or substantially equal to the thermal expansion of the material.

In the example where the arrangement of the at least two recess elements on the coupling means and/or one or more conduits and/or items is asymmetrical or substantially asymmetrical, the length of the recess element that is not of complementary or substantially complementary shape to the protrusion element located therein is at least equal to or substantially equal to the thermal expansion of the material.

In one embodiment at least two protrusion elements are provided, each protrusion element is located a spaced distance apart in a direction parallel or substantially parallel to the longitudinal axis of the coupling means and/or one or more conduits and/or items. In this embodiment, in one example, the at least two protrusion elements are of equal or substantially equal size, shape and/or design. Thus, in one embodiment, the arrangement of the at least two protrusion elements in or associated with the coupling means or at a join of the conduits and/or items is symmetrical or substantially symmetrical. In this embodiment, in one example, the at least two protrusion elements are of different or substantially different size, shape and/or design. Thus, in one embodiment, the arrangement of the at least two protrusion elements in or associated with the coupling means or at a join of the conduits and/or items is asymmetrical or substantially asymmetrical.

In one embodiment the one or more recess elements are provided on an inner surface of the coupling means. The inner surface typically faces towards the external surface of the conduit and/or item in use.

Preferably the one or more protrusion elements engages in and/or is mountable or locatable directly in said one or more recess elements in use.

In one embodiment the one or more protrusion elements and/or recess elements are integrally formed in the coupling means and/or one or more conduits and/or items in use.

In one embodiment a collar or sleeve element is locatable around or attached to at least part of an external surface of one or more of the conduits and/or items in use. Preferably the collar or sleeve element provides or forms the at least one protrusion element and/or the at least one recess element in use.

Preferably the collar or sleeve element includes one or more protrusions that protrude inwardly towards the conduit and/or item in use for location in one or more apertures or recesses defined in an external surface of the conduit and/or item.

Preferably the collar or sleeve element can be part of the at least one conduit and/or item, or it can be part of the coupling means.

Preferably the one or more recess elements and/or one or more protrusion elements are of the same or similar cross sectional shape. For example, the one or more recess elements can be U-shaped or substantially U-shaped in form. However, they could be V-shaped, square shaped and/or the like. For example, the one or more protrusion elements can be n-shaped or substantially n-shaped in form. However, they could be pyramid shaped, square shaped and/or the like.

In one embodiment the coupling means includes an outer coupling element, and further preferably at least one inner coupling element as well. For example, the inner coupling element can be a carrier element and/or the like. In this embodiment, preferably the at least one recess and/or protrusion element is defined in or associated with the inner coupling element or carrier element.

In one embodiment the outer coupling element can include two or more coupling members that are brought together to surround, directly or indirectly, a whole or part of a circumference or outer surface of at least part of the two or more conduits and/or items in use.

Preferably the coupling means or two or more coupling members are semi-circular or substantially semis-circular in shape.

Preferably the coupling means or two or more coupling members form an annular or substantially annular shaped outer coupling element when assembled in use.

Preferably the coupling means, outer coupling element and/or two or more coupling members forming the outer coupling element have securing means to allow the same to be secured around an outer surface of two or more conduits and/or items in use.

In one embodiment the securing means can include any or any combination of one or more apertures, threaded portion, complementary threaded portions, screws, nuts and bolts, ties, clips, inter-engaging members, welding, adhesive and/or the like.

In one embodiment the outer coupling element is a muff coupler, a screwed barrel coupler and/or the like.

In one embodiment the coupling means includes sealing means for sealing or substantially sealing the join between the two or more conduits and/or items in use.

The sealing means can be located at any location or any combination of locations on the one or more conduits, items, coupling means, coupling apparatus and/or the like.

Preferably the sealing means includes any member or members for allowing the join between the two or more conduits and/or items and/or between a conduit and/or item and a part of the coupling apparatus to be sealed or substantially sealed in use, such as for example, on or more gaskets, O-rings and/or the like.

In one embodiment the coupling means includes spacing and/or retaining means for allowing correct or optimal spacing between the two ends of the conduits and/or items, between sealing means provided with the coupling apparatus and/or the like.

Preferably the coupling means and/or the spacing and/or retaining means are arranged so as to at least partially overlaps with the ends of the conduit means and/or items to be joined in use.

In one embodiment the spacing and/or retaining means consists of or includes at least one member having a protruding portion for location directly between the two ends of the conduits and/or items being joined when the coupling apparatus is assembled. Preferably the protruding portion is arranged to be radially protruding with respect to the conduit and/or the axis of protrusion, is inwardly protruding with respect to the conduit and/or item, and/or is transverse, perpendicular or substantially perpendicular to the longitudinal axis of the items and/or conduits being joined together.

Preferably the at least one member having the protruding portion has one or more shoulder or recess portions defined on a surface having the protruding portion. For example, the one or more shoulder or recess portion can be defined on a base surface or surface arranged to face the conduit and/or item on which it is to be placed in use. The one or more shoulder or recess portions engage with the outer surface of the conduit(s) and/or item(s) adjacent one or more of the joining ends of the conduit(s) and/or item(s) when the apparatus is assembled to provide support for the coupling apparatus.

Preferably the one or more shoulder or recess portions are defined adjacent or directly adjacent to and on one or both sides of the protruding portion.

Preferably the length of the one or more shoulder or recess portions (i.e. the length in a direction parallel to the longitudinal axis of the conduit and/or item which are being joined) is at least equal to or substantially equal to the linear thermal expansion of the material used to form at least one of the conduits and/or items. This ensures the one or more shoulder or recess portions continue to engage with an end or ends of the conduit and/or item in use during thermal expansion.

Preferably a shoulder or recess portion is provided on both sides of the protrusion portion. The two shoulder or recess portions can be of the same or substantially the same length, thereby allowing the spacing and/or retaining means to be fitted with the coupling apparatus in any orientation. Alternatively, the two shoulder or recess portions can be of a different length.

In one embodiment the length of the at least one recess element is the distance of the at least one recess element and/or protrusion element on the conduit and/or item from the nearest end of the conduit and/or item being joined to another conduit and/or item less the minimum length of engagement of the one or more shoulder or recess portions of the spacing and/or retaining means and the length taken up of any sealing means and/or securing means. Preferably the length referred to is the dimension parallel to the longitudinal axis of the conduits and/or items.

In one embodiment the spacing and/or retaining means and/or the at least one member having a protruding portion includes one or more arm portions that protrudes outwardly from a side thereof for contact or engagement with sealing means in use.

In one embodiment the spacing and/or retaining means are in the form of or include a spool, a body portion and/or the like.

In one embodiment the spacing and/or retaining means includes securing means for securing with the securing means provided on or associated with the outer coupling element. For example, the securing means could be threaded securing means for engagement with complementary threaded means provided on or associated with the outer coupling element.

Preferably the spacing and/or retaining means are in the form of an annular or substantially annular member, sleeve or sleeve like member, spool, body portion and/or the like.

In one embodiment further retaining means are provided for retaining the sealing means and/or the spacing and/or retaining means in place and/or together or to provide or enhance the sealing effect of the sealing means when the apparatus is assembled in use.

Preferably the further retaining means includes any or any combination of one or more compression clips, clips, resilient biasing members, inter-engaging members and/or the like.

In one embodiment resilient biasing means are provided between the ends of the at least two conduits and/or items being joined together in use. The resilient biasing means biases the ends of the conduits and/or items outwardly of or away from each other in use. This typically allows for the weight of the conduits and/or items to be taken up within the system and allows for one or more of the conduits and/or items of the apparatus to be placed in a vertical or upright orientation.

Preferably the resilient biasing means are arranged to bias the conduits and/or items away from each other such that the at least one protrusion element locatable/engageable in the at least one recess element is located at or adjacent an end of the at least one recess element furthest from the ends of the conduits and/or items and/or corresponding to the most expanded or extended position of the coupling apparatus.

Preferably the most expanded or extended position of the coupling apparatus corresponds to the greatest distance the conduits and/or items will move apart from each other as a result of thermal expansion of the conduits and/or items in use.

Preferably the resilient biasing means includes any or any combination of one or more springs, sprung members, annular springs or sprung members, wave springs, coil springs, leaf springs and/or the like.

Preferably the resilient biasing means is provided in an expanded, uncompressed or relatively uncompressed state when located in the apparatus prior to first use.

Preferably the resilient biasing means is moved to a contracted, compressed or relatively compressed state during thermal expansion of the apparatus, conduits and and/or items in use.

Preferably thermal expansion of the apparatus, conduits and/or items in use applies a compressive force on the resilient biasing means which, when it becomes greater than the outwardly biasing force of the resilient biasing means, causes the at least one protrusion element locatable in the at least one recess element to be moved towards an end of the at least one recess element closest to the ends of the conduits and/or items and/or corresponding to the most contracted or retracted position of the coupling apparatus.

Preferably the biasing force generated by the resilient biasing means is greater than the weight of the conduits and/or items that is applied to the resilient biasing means in use. This allows the resilient biasing means and/or apparatus to work in an upright, vertical or substantially vertical orientation in use.

Preferably the maximum biasing force generated by the resilient biasing means is less than the force created by the expansion of the material(s) from which the conduits and/or items being joined are made from and/or the stability or buckling load of the overall unsupported conduit and/or item length. Thus, the resilient biasing force generated by the resilient biasing means should not be able to buckle the length of unsupported conduit and/or item with which the resilient biasing means is to be used with.

In one embodiment the resilient biasing means is located externally of the conduits and/or items being joined together.

In one embodiment the resilient biasing means is located adjacent to, in communication with, flush with and/or at least partially protruding within an internal cavity or interior defined by the conduits and/or items in use.

Preferably the resilient biasing means is formed of corrosive resistant material sufficient to withstand the temperature, pressure and/or content of the fluid that may flow through the conduits and/or items in use. For example, the resilient biasing means can be formed from stainless steel and/or the like.

In one embodiment the resilient biasing means is located adjacent the spacing and/or retaining means.

In one embodiment the spacing and/or retaining means includes at least one location recess for location of at least part of the resilient biasing means in use. Further preferably the at least one location recess faces towards the conduits and/or items being joined in use.

Preferably the one or more pipes, conduits and/or items are arranged to undergo slidable movement in use as a result of thermal expansion of the material in use, and further preferably in a direction axially or substantially axially of the one or more conduits and/or items in use.

In one embodiment the coupling apparatus is used in a compressed air distribution system, an exhaust system, fluid flow system and/or any system that encounters thermal expansion of one or more components thereof in use.

Preferably the one or more conduits and/or items include any or any combination of one or more sleeve members, elongate members, hollow members, pipes, tubes, hoses, joints and/or the like.

Preferably the one or more conduits and/or items are formed from or include aluminium, steel, stainless steel, plastic, brass and/or the like.

According to a second aspect of the present invention there is provided a method of using coupling apparatus, said method including the steps of coupling together the ends of two or more conduits and/or items using coupling means, engaging at least one of a recess element or a protrusion element defined on a surface of the coupling means arranged to face one of the conduits and/or items, with the other of the at least one recess element or protrusion element defined on an external surface of at least one of the conduits and/or items, characterised in that the at least one recess element is of such size, shape and/or design to allow movement of the at least one protrusion element locatable therein in use a distance equal to, substantially equal to or greater than the thermal expansion of the material used to form at least one of the conduits and/or items.

According to a third aspect of the present invention there is provided a compressed air distribution system including coupling apparatus.

According to a fourth aspect of the present invention there is provided a method of using a compressed air distribution system including coupling apparatus.

Embodiments of the present invention will now be described with reference to the accompanying figures, wherein:

Figures 1a and 1b show a cross sectional view taken through coupling apparatus, and an external view of the coupling apparatus respectively, according to an embodiment of the present invention;

Figure 1c shows an enlarged view of part of the coupling apparatus adjacent the ends of the conduits;

Figures 2a and 2b shows a cross sectional view taken through coupling apparatus, and an external view of the coupling apparatus respectively, according to a further embodiment of the present invention; and

Figure 3 shows a cross sectional view taken through coupling apparatus similar that shown in figures 1a-1c, but with the recess portion provided on one of the conduits rather than on the outer coupling element;

Figures 4a and 4b show a cross sectional view taken through coupling apparatus according to one embodiment of the present invention including resilient biasing means; and the resilient biasing means respectively.

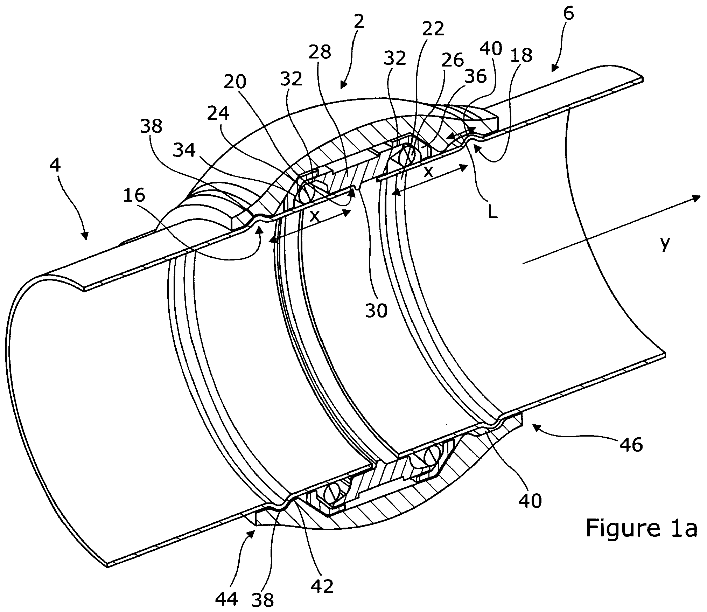

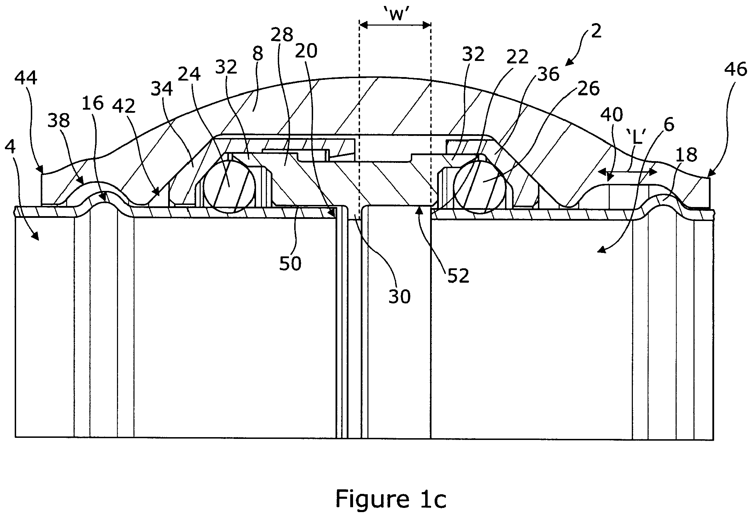

Referring firstly to figures 1a-1c, there is illustrated coupling apparatus 2 for coupling together two ends of pipe members 4, 6 to form a pipe joint in use.

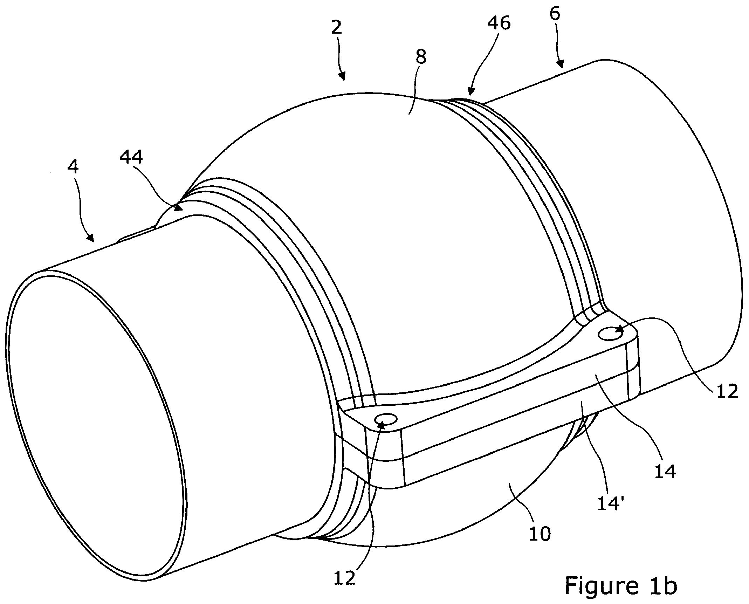

The coupling apparatus 2 includes two outer coupling elements 8, 10. Each outer coupling element 8, 10 is semi-circular in shape, such that when they are brought together in abutting relationship around the ends of the pipe members 4, 6, as shown in figure 1b, the coupling elements form an annular clamping ring or muff coupler. The two outer coupling elements are secured together in use via securing means in the form of apertures 12 provided on outwardly protruding flanges 14, 14' of each of the coupling elements 8, 10 respectively, through which threaded bolts (not shown) are inserted, and secured with adjustable nuts (not shown).

Each pipe 4, 6 has an outwardly protruding element 16, 18 provided a distance 'x' from their free ends 20, 22 thereof respectively. The protruding elements 16, 18 are annular in form and are provided circumferentially around the entire circumference of pipes 4, 6 in one cross sectional plane of the pipes.

The coupling apparatus 2 also includes sealing means in the form of two O-rings 24, 26; one O-ring provided between the protruding element and the free end of each pipe 4, 6 to allow the joint between the two pipes to be sealed or substantially sealed in use, irrespective of axial movement of the pipes in use.

The coupling apparatus 2 also includes retaining and spacing means in the form of a spool member 28. The spool member 28 includes a protruding portion 30 for location directly between the two ends 20, 22 of the pipes 4, 6 when assembled in use, and two outwardly protruding arm members 32 for engagement with the O-rings 24, 26 when assembled in use. The spool member 28 is typically an annular member that is located around the external circumferential surfaces of the pipes 4, 6 adjacent their ends 20, 22 thereof.

Further retaining means in the form of compression clips 34, 36 are provided around the circumferential surface of the pipes 4, 6 adjacent their ends 20, 22 thereof respectively to retain the O-ring and spool member 28 in place on the pipe joint when assembled.

Each coupling element 8, 10 is of such size and shape so as to allow location around the O-rings 24, 26, the compression clips 34, 36 and the spool 28 and the two ends of the pipes 4, 6 when assembled.

Each coupling element 8, 10 has recess portions 38, 40 defined on an inner surface 42 thereof. Recess portion 38 is defined adjacent end 44 of the coupling elements and recess portion 40 is defined adjacent opposite end 46 of the coupling elements. The ends 44, 46 are located around the outer circumferential surface of the pipes 4, 6 in use. The recess portions 38, 40 face the external surface of pipes 4, 6 when the coupling apparatus is assembled on the pipes in use. In addition, protrusion portions 16, 18 are located in recess portions 38, 40 respectively in use.

Recess portion 38 is of complementary or substantially complementary shape to protrusion portion 16, such that a snug fit is defined between the same in use. In accordance with the present invention, recess portion 40 is not of complementary or substantially complementary shape to protrusion portion 18 which is located in the recess portion 40 when assembled. In particular, the length 'l' of recess portion 40 in a direction parallel to the longitudinal axis 'y' of the pipes 4, 6 is such so as to allow movement of the protrusion portion 18 therein in use a distance equal to or substantially equal to the distance the pipes will move due to linear thermal expansion of the material from which at least pipe 6 is made from. In one example, the linear thermal expansion for both pipes 4, 6 is calculated and used to define the length 'l' of the recess portion, irrespective of whether the pipes are formed from the same or different materials.

Thus, the linear thermal expansion for the material from which at least pipe 6 is made from can be calculated at a maximum pre-determined temperature and pressure the pipe system will be exposed to in use. The linear thermal expansion is calculated using the linear thermal expansion coefficient for the pipe material, the length of the pipe and the change in temperature that the pipe will be exposed to in use. The length 'l' of the slot is made of such length so as to accommodate the maximum length of linear thermal expansion the material is likely to undergo at the maximum pre-determined temperature and pressure that the pipe will be exposed to in use.

The spool member 28 has two shoulder portions 50, 52 on the conduit facing surface of the same separated by the protrusion portion 30. The shoulder portions 50, 52 are for engaging with the external surfaces of pipes 4, 6 adjacent their ends 20, 22 thereof to provide support. The length 'w' of the shoulder portion 52 is the same or substantially the same as the length 'l' of recess 40, and the maximum length of thermal expansion, that has been calculated for pipe 6. This ensures that the spool member 28 is always supporting the ends of the pipes 4, 6 irrespective of the distance moved by the pipes relative to each other due to thermal expansion of the pipe materials.

The length of shoulder portion 50 can be the same as the length 'w' of the shoulder portion 52, or it can be longer or shorter than the length of the shoulder portion 50. The former embodiment has the advantage that the spool member 28 cannot be accidentally assembled the wrong way round.

Although the illustrated example shows an asymmetrical arrangement of the recess portions 38, 40, it will be appreciated that the recess portions 38, 40 can be symmetrical or substantially symmetrical in form such that elongate recesses 38, 40 are of similar, the same or substantially the same shape, size and dimensions.

In addition, although the recess portions 38, 40 are defined in the coupling elements and the protruding portions 16, 18 are shown on the external surface of the pipes 4, 6, it will be appreciated that the recess portions could be defined on the external surface of the pipes 4, 6 and the protruding portions 16, 18 could be defined on the inner surface of the coupling elements.

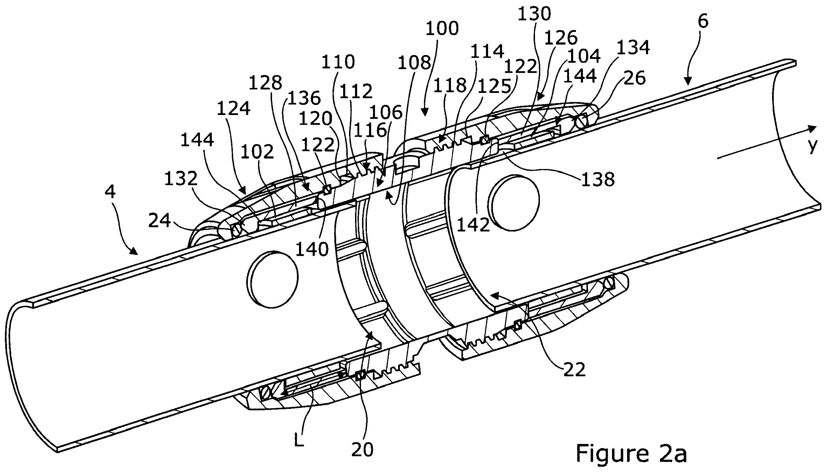

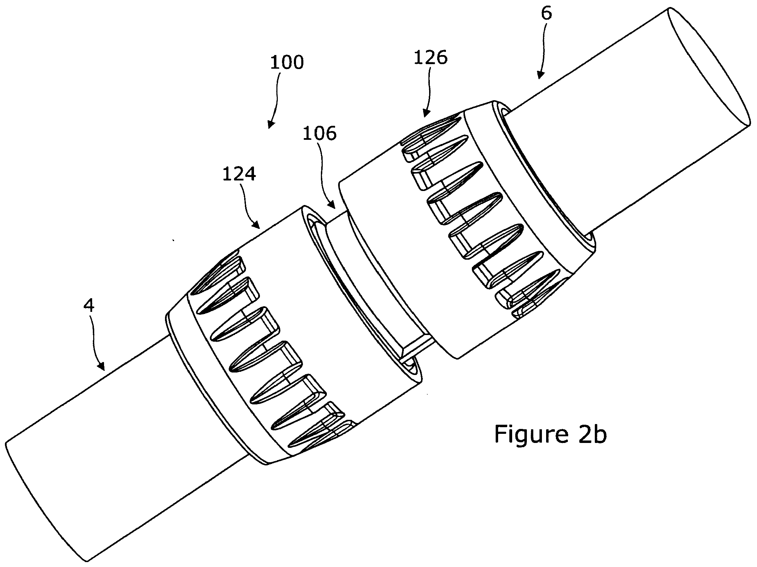

A further embodiment of coupling apparatus 100 according to the present invention is shown in figures 2a and 2b, wherein pipes 4, 6 have annular collar members 102, 104 provided circumferentially around an external surface thereof adjacent ends 20, 22, rather than protruding portions 16, 18 as shown in figures 1a-1b. The same reference numerals are used in figures 2a and 2b to define the same features referred to in figures 1a-1b.

In this embodiment the spacing and retaining means provided between the two pipes 4, 6 includes a body member 106 that overlaps and engages with the external surface of the pipes adjacent the ends 20, 22 thereof. The inner surface 108 of body member 106 that engages with the external surfaces of the pipes 4, 6 is of complementary or substantially complementary shape to the external surfaces of the pipes 4, 6. The outer surface 110 of body member 106 has two spaced apart threaded potions 112, 114 to allow engagement with complementary threaded portions 116, 118 provided on inner surfaces 120, 122 of outer coupling elements 124, 126 respectively. The outer coupling elements 124, 126 are in the form of threaded barrels in this example. Sealing means in the form of O-rings 123, 125 are provided between the outer coupling elements 124, 126 and the body member 106.

The coupling apparatus 100 includes annular inner coupling elements or carrier members 128, 130 for location around the collar members 102, 104 provided on the end of each of the pipes 4, 6. The carrier members 128, 130 are provided between the outer coupling elements 124, 126 and the collar members 102, 104 when the coupling apparatus is assembled. Ends 132, 134 of the carrier members 128, 130 furthest from the ends 20, 22 of the pipes engage with sealing means in the form of O-rings 24, 26. Ends 136, 138 of carrier members 128, 130 closest to the ends 20, 22 of the pipes engage with outermost ends 140, 142 of body member 106.

The pipes 4, 6 will undergo thermal expansion and contraction at different temperatures in the locality in which the pipes are assembled in use. During thermal expansion of the pipes 4, 6, the pipes will slidably move in a direction parallel or substantially parallel to the longitudinal axis 'y' of the pipes. The distance the pipes 4, 6 will move during this thermal expansion in the direction 'y' is equal to or substantially equal to the linear thermal expansion of the material from which the pipes are formed. This in turn will cause collar members 102, 104 to move in the same or similar direction to axis 'y'. In accordance with the present invention, in order to accommodate the maximum linear thermal expansion at a pre-determined maximum pressure and temperature that the system is likely to encounter in use, an elongate recess portion 144 is defined on the inner surface of each of the carrier members 128, 130. The length 'l' of each of the recess portions 144 on the carrier members 128, 130 when added together in total, is of such length 'l' to allow for this maximum linear thermal expansion. Thus, in the illustrated example, the length of each recess portion 144 is half the length of the distance the pipe will move during maximum linear thermal expansion of the pipe.

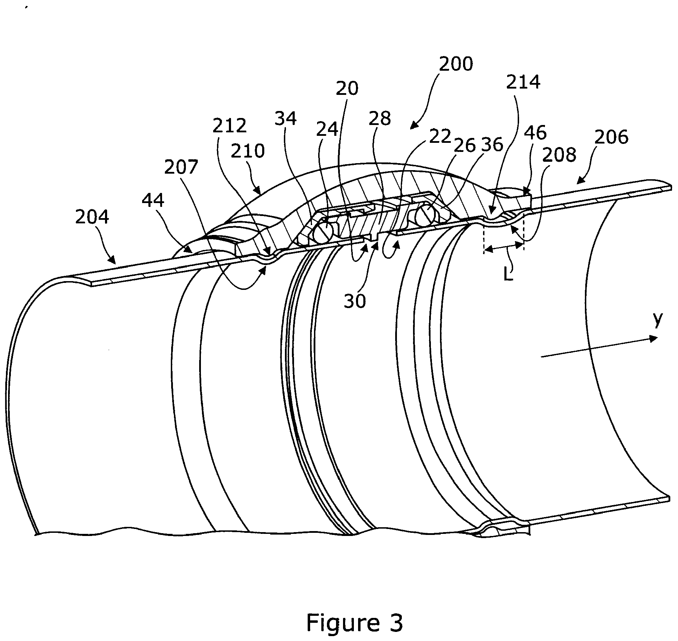

Figure 3 shows a cross sectional view taken through coupling apparatus 200 similar that shown in figures 1a-1c, but with the recess portion provided on one of the conduits rather than on the outer coupling element. The same reference numerals are used to define the same features as in figures 1a-1c.

In particular, the coupling apparatus 200 is arranged to joined the ends 20, 22 together of elongate conduits 204, 206 respectively in an end to end manner. Conduits 204, 206 each have a recess portion 207, 208 defined on an outer surface of the same respectively, and each recess portion is provided circumferentially around said outer surface. The outer coupling elements (only one of which is shown in figure 3 - 210) are similar in design to outer coupling elements 8, 10 in figures 1a-1c, with the exception that in place of the recess portions 38, 40, there is provided a protrusion portion 212, 214 provided adjacent each end 44, 46 thereof respectively. Each protrusion portion 212, 214 protrudes towards the outer surface of the conduits 204, 206 respectively and is located in the respective recess portions of the conduits 207, 208.

Recess portion 207 of conduit 204 is complementary or substantially complementary to protrusion portion 212 of the outer coupling elements 210, such that a snug fit is defined between the same in use. In accordance with the present invention, recess portion 208 is not of complementary shape or substantially complementary shape to protrusion portion 214 which is located in recess portion 208 when assembled. In particular, the length 'l' of recess portion 208 in a direction parallel to the longitudinal axis 'y' of the conduits 204, 206 is such so as to allow movement of the protrusion portion 214 there in use a distance equal to or substantially equal to the linear thermal expansion of the material from which at least conduit 206 is made from. In one example, the linear thermal expansion of both conduits 204, 206 is calculated and used to define the length 'l' of the recess portion, irrespective of whether the pipes are formed from the same or different materials. Thus, the actual length 'l' of the recess portion, in one example, takes into account the width of the protrusion portion 214 located in the same and the distance the protrusion portion 214 will travel due to thermal expansion of the material from which the conduits are formed.

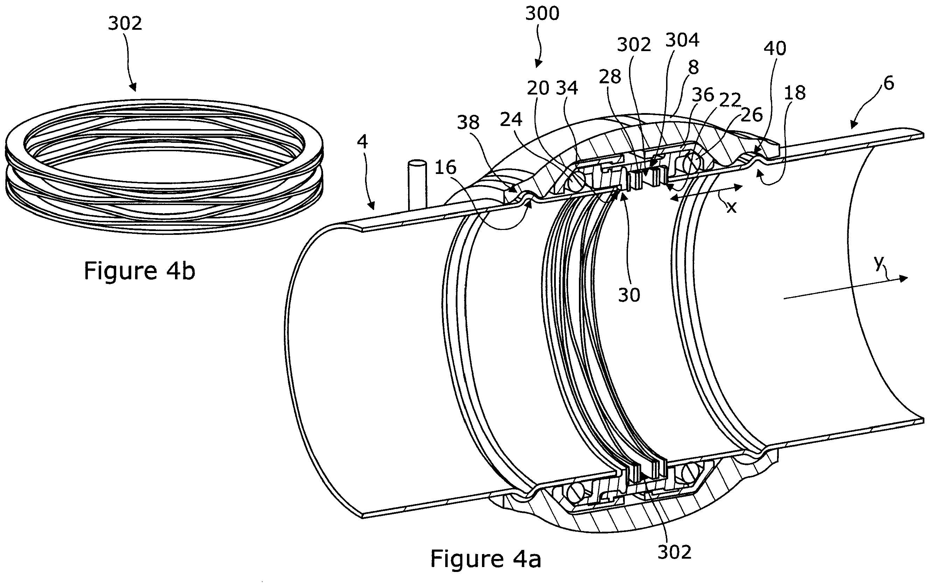

A further embodiment of coupling apparatus according to the present invention is shown in figures 4a and 4b. The coupling apparatus 300 is similar in arrangement to the apparatus 2 shown in figures 1a and 1b. The same features are described using the same reference numerals as for figures 1a and 1b.

In this embodiment resilient biasing means in the form of an annular wave spring 302 is provided between the two ends 20, 22 of the pipes 4, 6. Spring 302 biases the ends 20, 22 away from each other, thereby forcing protrusion element 18 to the most extended position in recess portion 40 (i.e. protrusion element 18 is the furthest or maximum distance in the recess portion 40 from the centre of coupling element 8).

Spool member 28 has a spring location recess 304 defined on a surface facing towards the pipes 4, 6 for location of at least part of the spring 302 in use, thereby keeping the same in position in the apparatus in use. The protruding portion 30 of the spool member 28 is located between end 20 of pipe 4 and the spring 302.

Thus, in this embodiment, the coupling apparatus 300 is in the most expanded or extended position when assembled and prior to first use of the apparatus (i.e. prior to thermal expansion of the apparatus). The spring 302 is in an uncompressed or relatively uncompressed state. Thermal expansion of the conduits 4, 6 in use causes protrusion element 18 to move inwardly of the coupling element 8 in use within recess portion 40, thereby causing compression or relative compression of the spring 302.

The spring 302 is arranged such that the biasing force generated by the same is greater than the weight of the conduits 4, 6 being applied to the spring in use. This allows the coupling apparatus to be used in an upright, vertical or substantially vertical orientation. Furthermore, the biasing force generated by spring 302 is less than the force required to buckle the conduits 4, 6 in use. This prevents the spring 302 from causing any buckling within the conduits 4, 6 in use.

**Claims**

1. Coupling apparatus, said coupling apparatus including coupling means for coupling together the ends of two or more conduits and/or items in use, said coupling means including at least one of a recess element or a protrusion element defined on a surface of the coupling means arranged to face one of the conduits and/or items in use, for engagement with the other of the at least one recess element or protrusion element defined on an external surface of at least one of the conduits and/or items in use, **characterised in that** the at least one recess element is of such size, shape and/or design to allow movement of the at least one protrusion element locatable therein in use a distance equal to, substantially equal to or greater than the thermal expansion of the material used to form at least one of the conduits and/or items.

2. Coupling apparatus according to claim 1 wherein the at least one recess element and/or the at least one protrusion elements is provided circumferentially or peripherally on the coupling means, at least one conduit and/or item.

3. Coupling apparatus according to claim 1 wherein at least two recess elements and/or at least two protrusion elements are provided and are located a spaced distance apart in a direction parallel or substantially parallel to a longitudinal axis of the coupling means, one or more conduits and/or items.

4. Coupling apparatus according to claim 1 wherein at least two recess elements are provided on the coupling means, one or more conduits and/or items and the length of said at least two recess elements are equal or substantially equal, and wherein the length of each of said recess elements is half or substantially half the distance of linear thermal expansion of the material from which the one or more conduits and/or items are made.

5. Coupling apparatus according to claim 1 wherein the coupling means includes an outer coupling element and at least one inner coupling element, the at least one recess element and/or protrusion element defined in or associated with the inner coupling element.

6. Coupling apparatus according to claim 1 wherein the coupling means includes sealing means for sealing of substantially sealing the join between the two or more conduits and/or items in use.

7. Coupling apparatus according to claim 1 wherein the coupling apparatus includes retaining means for allow correct or optimal spacing between the two ends of the conduits and/or items in use and/or between sealing means provided on or associated with coupling apparatus in use, and wherein the coupling means and/or the retaining means are arranged so as to at least partially overlap with the ends of the conduit means and/or items to be joined in use.

8. Coupling apparatus according to claim 7 wherein the retaining means consists of or includes at least one member having a protruding portion for location directly between the two ends of the conduits and/or items being joined, wherein the protruding portion is arranged to be radially protruding inwardly with respect to the conduit and/or is transverse, perpendicular or substantially perpendicular with respect to a longitudinal axis of the conduits and/or items being joined together.

9. Coupling apparatus according to claim 8 wherein the at least one member having one or more shoulder portions defined on a surface thereof having the protruding portion for engagement with an outer surface of the conduit(s) and/or item(s) adjacent one or more of the joining ends of the conduit(s) and/or item(s) when the apparatus is assembled to provide support for the coupling apparatus.

10. Coupling apparatus according to claim 9 wherein a length of the one or more shoulder portions is at least equal to or substantially equal to the linear thermal expansion of the material used to form at least one of the conduits and/or items.

11. Coupling apparatus according to any preceding claim wherein the length of the at least one recess element is the distance of the at least one recess element and/or protrusion element on the conduit and/or item from the nearest end of the conduit and/or item being joined together less the minimum length of engagement of the one or more shoulder portions of the retaining means and the length taken up of any sealing means and/or securing means.

12. Coupling apparatus according to claim 1 wherein resilient biasing means are provided between the ends of the at least two conduits and/or items being joined together in use, and wherein the resilient biasing means are arranged to bias the ends of the conduits and/or items away from each other such that the at least one protrusion element is located at or adjacent an end of the at least one recess element furthest from the ends of the conduits and/or items and/or corresponding to a most expanded or extended position of the coupling apparatus.

13. Coupling apparatus according to claim 12 wherein the resilient biasing means includes any or any combination of one or more springs, spring members, annular springs or sprung members, wave springs, coil springs or leaf springs.

14. Coupling apparatus according to any preceding claim for use in a compressed air distribution system, an exhaust system a fluid flow system and/or any system that encounters thermal expansion of one or more components thereof in use.

15. A method of using coupling apparatus, said method including the steps of coupling together the ends of two or more conduits and/or items using coupling means, engaging at least one of a recess element or a protrusion element defined on a surface of the coupling means arranged to face one of the conduits and/or items, with the other of the at least one recess element or protrusion element defined on an external surface of at least one of the conduits and/or items, **characterised in that** the at least one recess element is of such size, shape and/or design to allow movement of the at least one protrusion element locatable therein in use a distance equal to, substantially equal to or greater than the thermal expansion of the material used to form at least one of the conduits and/or items.

Figure 1a

Figure 1b

Figure 1c

EP 3 333 471 A1

Figure 2a

Figure 2b

Figure 3

Figure 4a

Figure 4b

Europäisches
Patentamt

European
Patent Office

Office européen
des brevets

**EUROPEAN SEARCH REPORT**

Application Number

EP 17 27 5193

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 1 297 162 A (CAMERON TOWNS, W. M. [GB]) 22 November 1972 (1972-11-22) * page 3, line 20 - page 4, line 8; figure 1 * | 1-15 | INV. F16L51/00 F16L27/12 |
| X | US 2 883 211 A (GRASS OTTO R) 21 April 1959 (1959-04-21) * columns 2,3; figures * | 1-15 | |
| X | US 2012/091707 A1 (LEE DO YOUN [KR] ET AL) 19 April 2012 (2012-04-19) * paragraphs [0053] - [0070]; figures 3-6b * | 1-15 | |
| X | EP 1 840 438 A1 (TOKYO METROPOLITAN GOVERNMENT [JP]; TAISEI KIKO CO LTD [JP]) 3 October 2007 (2007-10-03) * paragraph [0062]; figure 11 * | 1-15 | |
| X | GB 2 456 515 A (DAVIDSON PAUL [GB]; EDWARD 72 LTD [GB]; TITAN ENERGY LTD; FLUID LEADER) 22 July 2009 (2009-07-22) * abstract; figures * * pages 7-14 * | 1-15 | TECHNICAL FIELDS SEARCHED (IPC) F16L |
| X | DE 10 2014 008528 A1 (MAN TRUCK & BUS AG [DE]) 17 December 2015 (2015-12-17) * abstract; figures * * paragraphs [0034] - [0040] * | 1-15 | |
| X,P | WO 2017/109458 A1 (TECONNEX LTD [GB]) 29 June 2017 (2017-06-29) * abstract; figures 2a-4b * * page 19, last paragraph * | 1-15 | |

The present search report has been drawn up for all claims

| Place of search | Date of completion of the search | Examiner |
|---|---|---|
| Munich | 28 March 2018 | Untermann, Nils |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 27 5193

This annex lists the patent family members relating to the patent documents cited in the above-mentioned European search report.
The members are as contained in the European Patent Office EDP file on
The European Patent Office is in no way liable for these particulars which are merely given for the purpose of information.

28-03-2018

| Patent document cited in search report | | Publication date | Patent family member(s) | | Publication date |
|---|---|---|---|---|---|
| GB 1297162 | A | 22-11-1972 | NONE | | |
| US 2883211 | A | 21-04-1959 | NONE | | |
| US 2012091707 | A1 | 19-04-2012 | CN | 102454846 A | 16-05-2012 |
| | | | JP | 5250682 B2 | 31-07-2013 |
| | | | JP | 2012087931 A | 10-05-2012 |
| | | | KR | 101058957 B1 | 23-08-2011 |
| | | | US | 2012091707 A1 | 19-04-2012 |
| EP 1840438 | A1 | 03-10-2007 | CN | 101103222 A | 09-01-2008 |
| | | | EP | 1840438 A1 | 03-10-2007 |
| | | | HK | 1114414 A1 | 05-02-2010 |
| | | | JP | 4190502 B2 | 03-12-2008 |
| | | | JP | 2006200608 A | 03-08-2006 |
| | | | US | 2008258463 A1 | 23-10-2008 |
| | | | WO | 2006077691 A1 | 27-07-2006 |
| GB 2456515 | A | 22-07-2009 | GB | 2456515 A | 22-07-2009 |
| | | | WO | 2009090378 A1 | 23-07-2009 |
| DE 102014008528 | A1 | 17-12-2015 | NONE | | |
| WO 2017109458 | A1 | 29-06-2017 | NONE | | |

EPO FORM P0459

For more details about this annex : see Official Journal of the European Patent Office, No. 12/82